# EUROPEAN PATENT APPLICATION

(11) **EP 4 446 963 A1**
(43) Date of publication of application: **16.10.2024**
(21) Application number: 24166422.6
(22) Date of filing: 26.03.2024
(51) Int. Cl.: G06Q 10/08, G06F 21/44

(54) **INFORMATION PROCESSING METHOD, INFORMATION PROCESSING PROGRAM, AND INFORMATION PROCESSING DEVICE**

(30) Priority: 29.03.2023 JP 2023054275
(71) Applicant: DENSO CORPORATION, Kariya-city, Aichi-pref. 448-8661 (JP); HONDA MOTOR CO., LTD., Tokyo 107-8556 (JP)
(72) Inventor: OKABE, Tatsuya, Kariya-city, Aichi-pref., 448-8661 (JP); NAGATA, Koichi, Kariya-city, Aichi-pref., 448-8661 (JP); TACHIBANA, Dan, Wako-shi, Saitama, 351-0193 (JP); AIKAWA, Koichiro, Wako-shi, Saitama, 351-0193 (JP); TANIHATA, Akito, Minato-ku, Tokyo 107-8556 (JP); TABUSHI, Isao, Minato-ku, Tokyo 107-8556 (JP)
(74) Representative: Winter, Brandl - Partnerschaft mbB

(57) **Abstract**

An information processing method for processing related information related to a supply chain (SC) formed of a plurality of traders includes: by at least one processor (51), acquiring, when a supply item (IPr) supplied by the trader is an unattachable item (IXS) to which a real identification medium (PCd) for identifying the supply item (IPr) is not able to be attached, medium information of the real identification medium (S13); and issuing, based on the medium information, virtual identification data (CCd) for identifying the unattachable item (S15, S16) in place of the real identification medium (PCd).

## Description

### TECHNICAL FIELD

The disclosure in this specification relates to an information processing technology for processing information related to a supply chain.

### BACKGROUND

In a supply chain management method disclosed in WO2020/024289, two-dimensional codes are used to identify items traded between multiple traders. A two-dimensional code is attached to an item and distributed together with the item.

### PRIOR ART LITERATURES

### PATENT LITERATURE

Patent Literature 1: WO 2020/024289 A1

### SUMMARY

Items traded between traders may not have a physical form. In such a case, a medium such as a two-dimensional code cannot be attached to the item. Therefore, an item that cannot be attached with a medium such as a two-dimensional code (hereinafter referred to as an unattachable item) cannot be identified, and it may be difficult to associate the item with information such as transaction records.

One objective of the present disclosure is to provide an information processing method, an information processing program, and an information processing device that can handle unattachable items.

One aspect of the present disclosure is an information processing method for processing related information related to a supply chain formed of a plurality of traders. The information processing method includes: by at least one processor, acquiring, when a supply item supplied by the trader is an unattachable item to which a real identification medium for identifying the supply item is not able to be attached, medium information of the real identification medium; and issuing, based on the medium information, virtual identification data for identifying the unattachable item in place of the real identification medium.

Another aspect of the present disclosure is an information processing program for processing related information related to a supply chain formed of a plurality of traders. The information processing program causes at least one processor to execute: acquiring, when a supply item supplied by the trader is an unattachable item to which a real identification medium for identifying the supply item is not able to be attached, medium information of the real identification medium; and issuing, based on the medium information, virtual identification data for identifying the unattachable item in place of the real identification medium.

Another aspect of the present disclosure is an information processing device for processing related information related to a supply chain formed of a plurality of traders. The information processing device includes: an acquisition unit that is configured to acquire, when a supply item supplied by the trader is an unattachable item to which a real identification medium for identifying the supply item is not able to be attached, medium information of the real identification medium; and an issuance unit that is configured to issue, based on the medium information, virtual identification data for identifying the unattachable item in place of the real identification medium.

In these aspects, when the supply item is an unattachable item to which the real identification medium cannot be attached, virtual identification data is issued to replace the real identification medium. According to such switching from the real identification medium to the virtual identification data, it is possible to identify the unattachable item using the virtual identification data and to associate information with the unattachable item. As a result, it becomes possible to handle unattachable items.

### BRIEF DESCRIPTION OF DRAWINGS

FIG. 1 is a block diagram showing an overall image of a supply chain management system according to an embodiment of the present disclosure;
FIG. 2 is a diagram showing details of a supply chain together with FIG. 3;
FIG. 3 is a diagram showing details of the supply chain together with FIG. 2;
FIG. 4 is a diagram schematically showing a configuration of a blockchain;
FIG. 5 is a flowchart showing details of a cyberization process;
FIG. 6 is a flowchart showing details of a physicalization process;
FIG. 7 is a flowchart showing details of a transfer process; and
FIG. 8 is a flowchart showing details of a transfer process according to a first modification.

### DESCRIPTION OF EMBODIMENTS

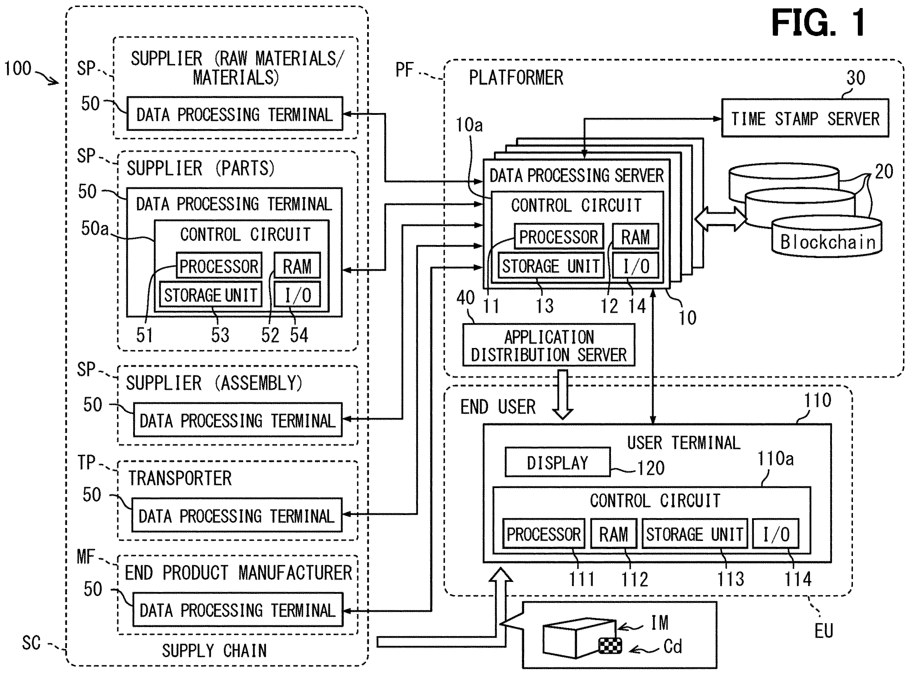

An information processing system 100 according to an embodiment of the present disclosure shown in FIG. 1 processes traceability information related to a supply chain SC constructed including multiple traders (hereinafter referred to as traceability information). The supply chain SC is a connection between traders to deliver industrial products, agricultural products, seafood, and the like to an end user EU (a consumer). As an example, the supply chain SC that supplies industrial products to the end user EU includes a large number of suppliers SP who procure raw materials or materials, manufacture parts, assemble parts, and the like, a transporter TP, an end product manufacturer MF, and the like as traders. The traders may further include secondary users of a final product IM, recyclers, and the like. The final product IM supplied by the supply chain SC may be various articles, such as automobiles, batteries, semiconductors, fresh produce, seafood, foods, flowers, pharmaceuticals, and chemicals, for example.

The information processing system 100 realizes traceability of the final product IM provided by the supply chain SC. To be more specific, the information processing system 100 continuously collects the details of processes performed by each trader, transaction records between traders, and the like as the above-mentioned traceability information. The information processing system 100 may acquire information (carbon footprint) indicating greenhouse gas emissions emitted by each trader as the traceability information. The information processing system 100 uses a blockchain technology to manage traceability information for the purpose of preventing tampering. In response to requests from each trader, the end user EU, and the like, the information processing system 100 provides the stored traceability information to the trader or the end user EU who is the requestor.

### [Configuration of Information Processing System]

The information processing system 100 includes a large number of data processing terminals 50, a data processing server 10, a time stamp server 30, an application distribution server 40, and the like. The information processing system 100 may further include a user terminal 110. Each element constituting the information processing system 100 is connected to the network as one node, and is capable of communicating with each other.

The data processing terminal 50 shown in FIGS. 1 to 3 is an information processing device operated by traders such as the supplier SP, the transporter TP, and the end product manufacturer MF involved in the manufacturing process of the final product IM supplied by the supply chain SC. The data processing terminal 50 is installed at a business base or the like of the trader. Products such as materials, parts, and assemblies shipped from the business bases of previous process traders are delivered to each business base. The delivered products undergo processing and other processing at the business base of the own process, and are shipped as new products to the business base of the trader in the subsequent process.

Identification information (hereinafter referred to as item identification information) for identifying each product is attached to products exchanged between the traders. For the item identification information, unique ID information (hereinafter referred to as a unique ID) issued by the data processing server 10, a hash value generated with a predetermined number of bits, or the like is used. The item identification information is recorded on, for example, a two-dimensional code such as a QR code (registered trademark) or a real identification medium PCd such as an RF tag. The real identification medium PCd on which the item identification information is recorded is attached to a product supplied by each trader (hereinafter referred to as a supply item IPr) and is distributed together with the supply item IPr. The item identification information may be updated for each trader, or the same information may be continuously used between multiple traders.

The data processing terminal 50 has a configuration that mainly includes a control circuit 50a. The control circuit 50a includes a processor 51, a RAM 52, a storage unit 53, an input/output interface 54, a bus connecting these components, and the like, and functions as a computer that performs calculation processing. The processor 51 is hardware for calculation processing coupled with the RAM 52. The processor 51 executes an application program (such as an information processing program) stored in the storage unit 53. The information processing program is a program for causing the data processing terminal 50 to perform an information processing method of the present disclosure. The input/output interface 54 is electrically connected to input devices such as a keyboard and a mouse, a display 55, a scanner or camera for reading identification information, a printer 56 for outputting identification information onto a paper medium, an RF tag, and the like.

The data processing terminal 50 reads item identification information from the real identification medium PCd based on the information processing program, and acquires information such as what was purchased from which trader (previous process supplier SP or the like) and when it was delivered, as transaction records. The data processing terminal 50 transmits the acquired transaction records and the like together with the item identification information to the data processing server 10.

The data processing server 10, the time stamp server 30, and the application distribution server 40 are server devices operated by an administrator of the supply chain SC or a platformer PF selected by the administrator. The administrator is, for example, an end product manufacturer MF or a regulatory agency that has supervisory authority over the final product IM supplied by the supply chain SC. The platformer PF is a business operator that provides large-scale information processing resources on the Internet, or an alliance (for example, Catena-X, or the like) that aims to share data across the entire supply chain SC. The data processing server 10, the time stamp server 30, and the application distribution server 40 may be on-premises server devices that are physically managed by an administrator, a platformer PF, or the like, or may be a virtual configuration provided on the cloud. The data processing server 10, the time stamp server 30, and the application distribution server 40 may be managed by mutually different administrators or platformers PF.

The data processing server 10 is an information processing device that mainly includes a control circuit 10a. The control circuit 10a includes a processor 11, a RAM 12, a storage unit 13, an input/output interface 14, a bus connecting these components, and the like, and functions as a high-performance computer that performs calculation processing at high speed. The processor 11 is hardware for calculation processing coupled with the RAM 12. The processor 11 accesses the RAM 12 to execute various processes related to management and provision of data (traceability information and the like). An information management program that implements functions related to data management, and an information provision program that implements functions related to data provision are stored in the storage unit 13.

The data processing server 10 receives and acquires transaction records and the like transmitted by the data processing terminal 50. The data processing server 10 stores the acquired transaction records and the like in the database 20 as traceability information associated with the supply chain SC based on the item identification information. The data processing server 10 manages the traceability information stored in the database 20. The database 20 may be constructed within an on-premises file server managed by the platformer PF, or may be constructed within a virtual file server provided on the cloud.

The database 20 uses a blockchain technology to store data to be stored including transaction records in a substantially non-tamperable state. As an example, the database 20 stores data to be stored as a transaction in a block of a private blockchain. The database 20 makes it difficult to tamper with the data to be stored, which is stored in each block, by hashing information stored in one block and storing the information in the next block. As another example, the database 20 may make it virtually impossible to tamper with the data to be stored by storing a hash value generated from the data to be stored in a block of a consortium type or public blockchain.

The time stamp server 30 is a server device that mainly includes a computer. As an example, the time stamp server 30 creates input information using news articles distributed by a news distribution server or the like. The time stamp server 30 generates a hash value of a predetermined number of bits (for example, 256 bits) as time stamp data by inputting the created input information into a hash function. The time stamp data is provided to the data processing server 10 and is stored in the database 20 together with the traceability information as verification data for verifying whether the acquisition time or storage time of the traceability information has been tampered with.

The application distribution server 40 is a server device that mainly includes a computer. The application distribution server 40 distributes an application for inquiring about traceability information (hereinafter referred to as a traceability application) to the user terminal 110 through the network. The traceability application is an application program for inquiring about transaction records, carbon footprints, and the like of a supply item IPr or a final product IM. The traceability application is downloaded from the application distribution server 40 to the storage unit 113 of the user terminal 110, and is automatically installed on the user terminal 110 after the download has been completed. The application distribution server 40 may be, for example, a server device managed by the vendor of the operating system of the user terminal 110.

The user terminal 110 is a smartphone, a tablet terminal, a dedicated reading terminal, or the like owned by the end user EU. The user terminal 110 includes a camera, a terminal communication device, and the like, in addition to a control circuit 110a and a display 120. The control circuit 110a includes a processor 111, a RAM 112, a storage unit 113, an input/output interface 114, a bus connecting these components, and the like, and functions as a computer that performs calculation processing. The above-mentioned traceability application is installed on the user terminal 110.

The user terminal 110 functions as an information display device that displays the traceability information on a display screen of the display 120 by executing the traceability application by using the processor 111. The user terminal 110 reads a two-dimensional code (see product code Cd in FIG. 1) attached to the final product IM and the like based on a manipulation of the end user EU. The user terminal 110 requests the data processing server 10 to provide traceability information using item identification information recorded in the product code Cd. Upon receiving the provided data from the data processing server 10, the user terminal 110 displays the traceability information of the final product IM on a display screen.

### [Traceability of Product Without Physical Form]

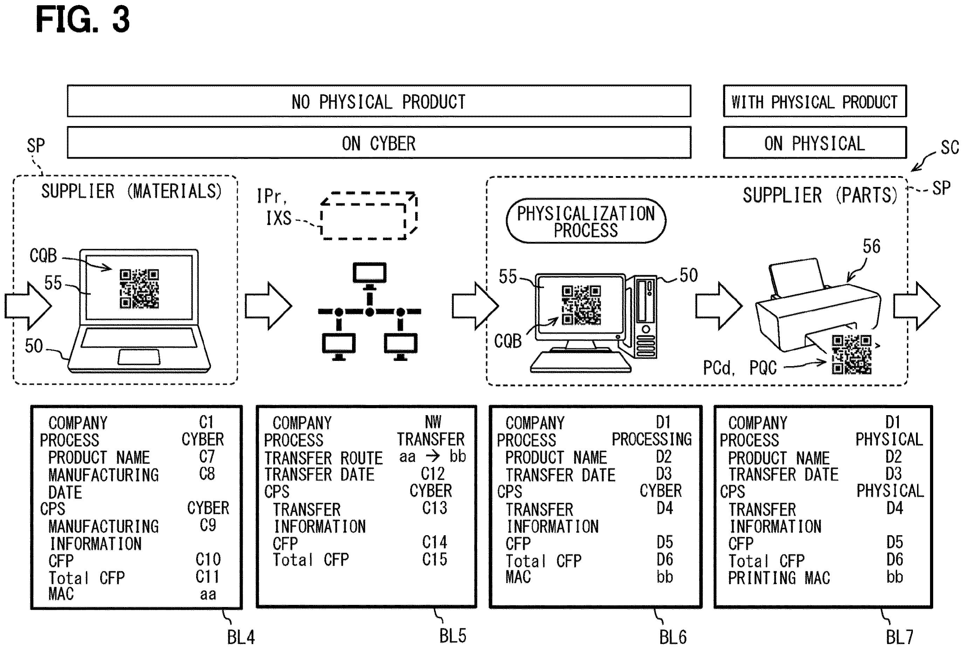

In the supply chain SC, supply items IPr traded between traders may not have a physical form. There are also supply items IPr that are difficult to attach real identification media PCd such as two-dimensional codes and RF tags even when they have a physical form. As an example, melted aluminum for casting (molten metal), sand mold used for manufacturing casting products (engine blocks or the like), or the like corresponds to a supply item IPr to which the real identification medium PCd cannot be attached (hereinafter referred to as an unattachable item IXS, see FIG. 3).

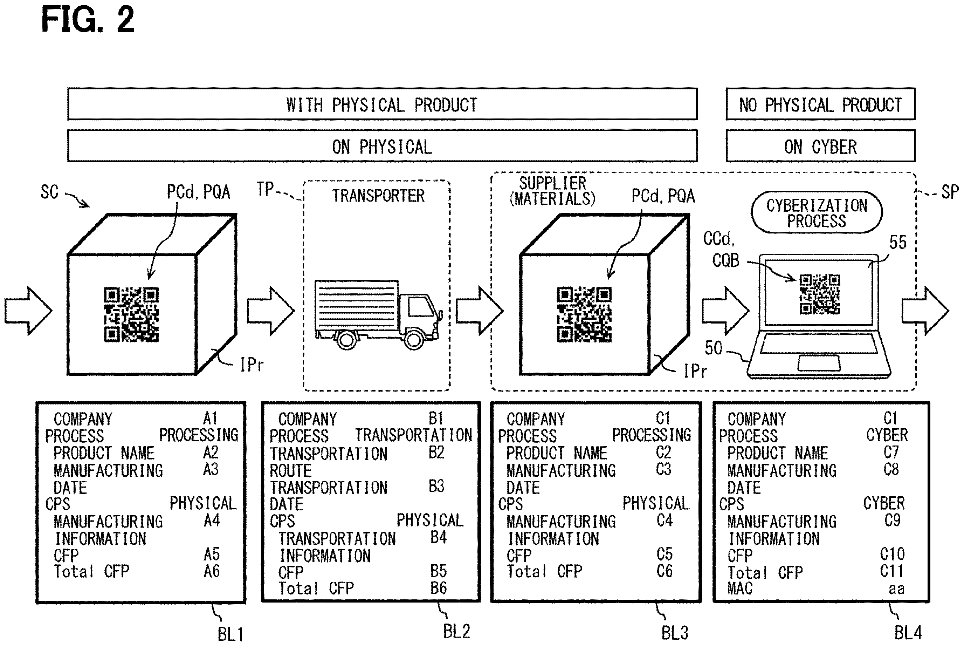

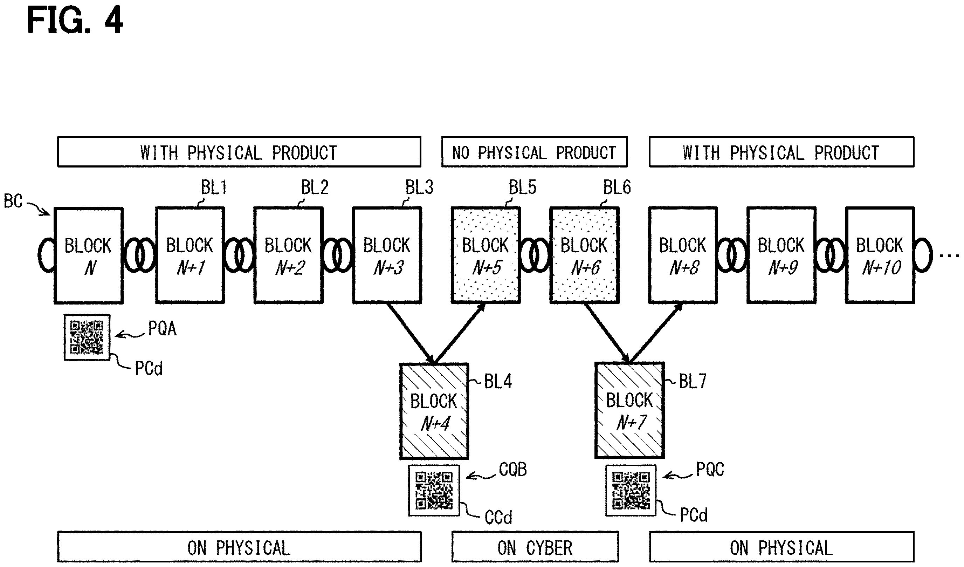

When the real identification medium PCd can be attached to the supply item IPr, the attached real identification medium PCd is used to identify the supply item IPr. Therefore, the transaction record of the supply item IPr can be associated with a series of data groups (see blockchain BC in FIG. 4) that are associated with the supply item IPr. As a result, blocks BL1 and BL2 (see FIGS. 2 and 4) that store transaction records in a processing process, a transportation process, and the like of the supply item IPr are sequentially added to the blockchain BC.

On the other hand, when the supply item IPr is an unattachable item IXS, it becomes difficult to associate transaction records and the like with a series of data groups because the unattachable item IXS cannot be identified using the real identification medium PCd. That is, the degree of difficulty of matching the traceability information and the supply item IPr via the real identification medium PCd (item identification information) becomes extremely high for the unattachable item IXS.

In order to cope with such problems, in the information processing system 100, when the supply item IPr is the unattachable item IXS, virtual identification data CCd (see FIG. 2) for replacing the real identification medium PCd is issued. The virtual identification data CCd converted from the real identification medium PCd is transferred between the data processing terminals 50 of the traders who handle the unattachable item IXS, and is used to identify the unattachable item IXS. Hereinafter, details of the process performed to accumulate traceability information of unattachable items IXS will be described based on FIGS. 2 to 4 and with reference to FIG. 1.

### <Cyberization of Real Identification Medium>

The data processing terminal 50 sets a name of the company implementing the current process, a type of process (for example, processing or the like), a product name, a manufacturing date, manufacturing information, carbon footprint emitted in the current process, accumulated carbon footprint, and the like (see FIG. 2). The data processing terminal 50 sets status information (Cyber-Physical Status, CPS) of the medium on which item identification information and the like are recorded. CPS is information indicating which one of the real identification medium PCd and the virtual identification data CCd is currently being used. The data processing terminal 50 transmits each set of information on the current process to the data processing server 10 as a transaction record. Accordingly, the transaction record is recorded as traceability information in the latest block of the blockchain BC (see FIG. 4) stored in the database 20.

As an example, the data processing terminal 50 of the supplier SP that supplies molten metal as a material reads the real identification medium PCd (real two-dimensional code PQA) attached to the delivered supply item IPr (aluminum before melting). The data processing terminal 50 cooperates with the data processing server 10 and records the process of melting aluminum in its own process in the database 20 in association with the item identification information recorded in the real two-dimensional code PQA (see BL3 in FIGS. 2 and 4). In the transaction record, the CPS is set to "physical" to indicate that the real identification medium PCd is used.

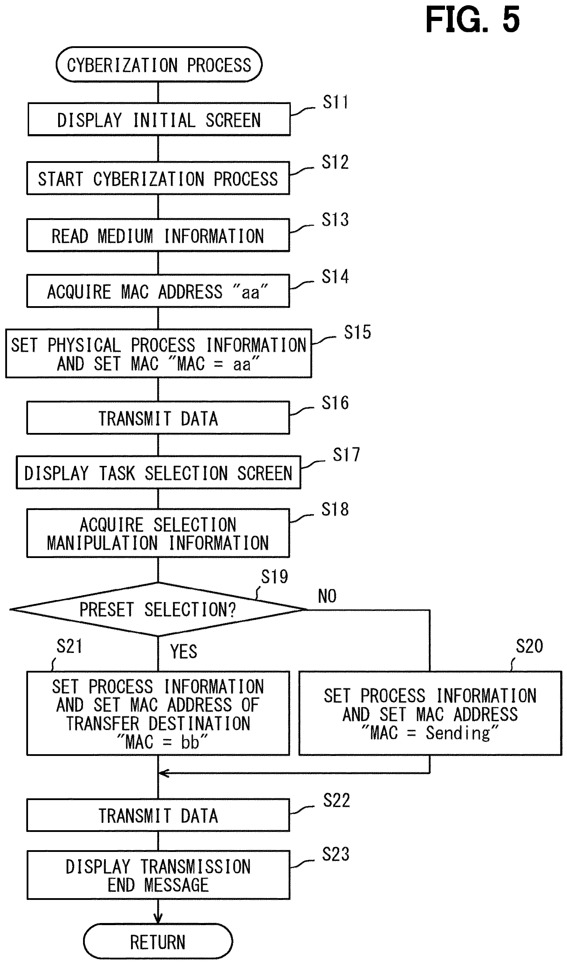

The data processing terminal 50 performs a cyberization process (see FIG. 5) to convert the real identification medium PCd to the virtual identification data CCd in response to the fact that the supply item IPr in its own process is an unattachable item IXS. The data processing terminal 50 acquires medium information by reading the real identification medium PCd, and issues virtual identification data CCd based on the medium information. The medium information may be image data of a real two-dimensional code PQA captured by a camera, or may be recorded information (item identification information or the like) read from the real two-dimensional code PQA. Similarly, the virtual identification data CCd may be image data of a virtual two-dimensional code CQB, or may be electronic data that includes item identification information as a main component, thereby making it possible to draw the virtual two-dimensional code CQB.

The data processing terminal 50 transmits a conversion record of converting the real identification medium PCd to the virtual identification data CCd to the data processing server 10. Based on the information received from the data processing terminal 50, the data processing server 10 records the process of the cyberization process in the database 20 similarly to the processing process of manufacturing molten metal (see BL4 in FIGS. 2 and 4). According to the cyberization process, the CPS recorded in the database 20 is changed from "physical" to "cyber". Accordingly, addition of transaction records by reading the real identification medium PCd is prohibited. As described above, the process of validating the virtual identification data CCd and invalidating the real identification medium PCd corresponds to a process of electronically issuing the virtual identification data CCd (virtual two-dimensional code CQB).

The data processing terminal 50 transmits, to the data processing server 10, terminal identification information for identifying the terminal (its own terminal) that has executed the cyberization process in conjunction with the switching of the CPS to "cyber". Accordingly, the terminal identification information of the data processing terminal 50 that issued the virtual identification data CCd is further recorded in the database 20 as one piece of traceability information. As an example, a media access control (MAC) address of the own terminal is added to the database 20 as terminal identification information (see BL4 in FIG. 2). In FIG. 2 and FIG. 3, a MAC address is written as "aa", "bb", or the like for the sake of simplicity. An actual MAC address is represented by a 12-digit hexadecimal value such as "00-00-00-XX-XX-XX".

The data processing terminal 50 may associate the virtual identification data CCd (virtual two-dimensional code CQB) with a non-fungible token (hereinafter referred to as an NFT). In this case, the virtual identification data CCd can be managed using an NFT issued on the blockchain BC. An NFT is configured as a token that conforms to ERC721, the Ethereum standard. Ethereum is one platform that uses the blockchain BC. Along with the electronic issuance of the virtual identification data CCd, the data processing server 10 issues an NFT associated with the individual of the issued virtual identification data CCd. As a result, the virtual identification data CCd (the virtual two-dimensional code CQB) can be managed as unique and one-of-a-kind data.

### <Transfer of Virtual Identification Data>

The data processing terminal 50 transmits virtual identification data CCd (virtual two-dimensional code CQB) to the data processing terminal 50 of the trader (parts supplier SP or the like) of a delivery destination to which the unattachable item IXS is delivered (see FIG. 3). As described above, the virtual identification data CCd is transferred on the cyber (network) in parallel with the actual transfer (transportation) of the unattachable item IXS.

The data processing terminal 50 records a transfer process of the virtual identification data CCd in the database 20 (see BL5 in FIG. 3). Specifically, the data processing terminal 50 sets "NW" indicating transfer over a network as information corresponding to the company name of the transporter TP. The data processing terminal 50 acquires terminal identification information (MAC address) that specifies the data processing terminal 50 associated with the delivery destination, and sets each MAC address of the transmission source and transmission destination "aa → bb" as information indicating a transfer route. This information is transmitted from the data processing terminal 50 to the data processing server 10 along with a transfer date, CPS, transfer information, each carbon footprint, and the like and is recorded in the database 20 as traceability information indicating the transfer process.

### <Physicalization of Virtual Identification Data>

As an example, the data processing terminal 50 of the supplier SP, which manufactures parts by casting, receives virtual identification data CCd (virtual two-dimensional code CQB) associated with the delivered unattachable item IXS (molten aluminum) from the data processing terminal 50 in the previous process. In a block BL5 associated with the received virtual identification data CCd, a MAC address as terminal identification information for specifying the data processing terminal 50 of the delivery destination of the unattachable item IXS is recorded in the previous process. When the terminal identification information registered in advance in the block BL5 and the terminal identification information of the own terminal match, the data processing terminal 50 can add data (process information) in association with the item identification information recorded in the virtual two-dimensional code CQB. In other words, terminals other than the data processing terminal 50 designated in the previous process (transfer source) cannot add data to the virtual two-dimensional code CQB because their terminal identification information does not match.

The data processing terminal 50 cooperates with the data processing server 10 and records the process of casting parts in its own process in the database 20 in association with the item identification information recorded in the virtual two-dimensional code CQB (see BL6 in FIGS. 3 and 4). In the transaction record, the CPS is set to "cyber" to indicate that the virtual identification data CCd is used. The MAC address "bb" of the data processing terminal 50 is added to the database 20 as terminal identification information indicating the terminal to which the processing process has been added.

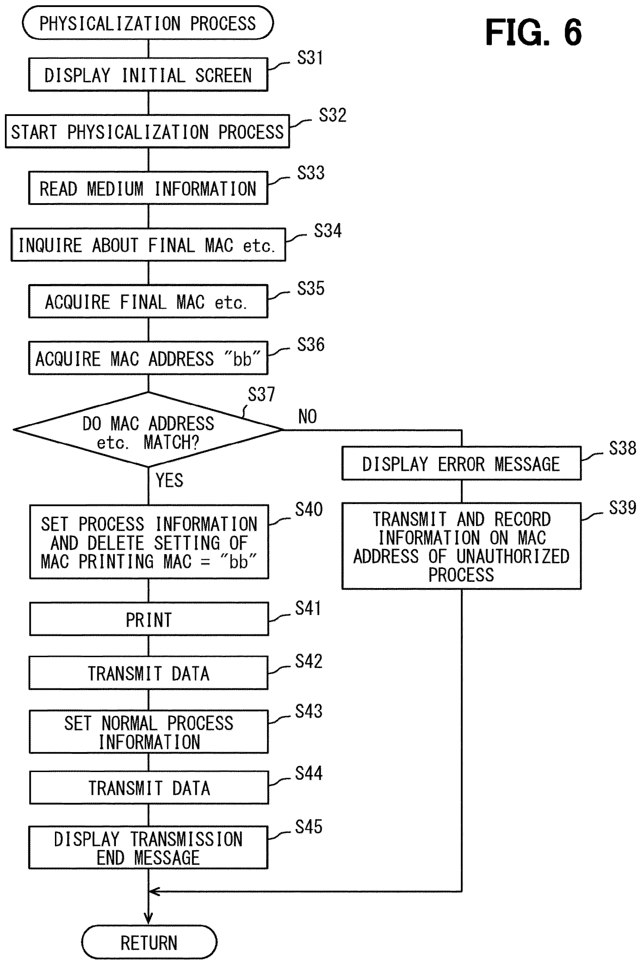

Through the above processing processes, the supply item IPr changes from the unattachable item IXS to a normal item to which the real identification medium PCd can be attached. The data processing terminal 50 performs a physicalization process (see FIG. 6) to convert the virtual identification data CCd to the real identification medium PCd in response to the fact that the supply item IPr in its own process is no longer an unattachable item IXS. Through the physicalization process, the real identification medium PCd is reissued in place of the virtual identification data CCd. The real identification medium PCd to be reissued may be in the same form (two-dimensional code) as the real identification medium PCd before being cyberized, or may be in a different form (such as an RF tag).

The data processing terminal 50 records the physicalization process in the database 20, similarly to the processing process of casting parts (see BL7 in FIGS. 3 and 4). In the physicalization process, the data processing terminal 50 confirms that the CPS state of the database 20 is "cyber", that is, that there is a conversion record to the virtual identification data CCd. After confirming the conversion record, the data processing terminal 50 uses the printer 56 to print a real two-dimensional code PQC on which the medium information is recorded on a paper medium. Accordingly, the real identification medium PCd is output.

After outputting the real identification medium PCd, the data processing terminal 50 transmits a conversion record from the virtual identification data CCd to the real identification medium PCd to the data processing server 10. To be more specific, the data processing terminal 50 sets the CPS to "physical". The data processing terminal 50 sets the MAC address "bb" of the own terminal as terminal identification information indicating the terminal that printed the real two-dimensional code PQC. This information is transmitted from the data processing terminal 50 to the data processing server 10 along with a product name, a transfer date, transfer information, each carbon footprint, and the like and is recorded in the database 20 as traceability information indicating the physicalization process. Accordingly, addition of transaction records by reading the virtual identification data CCd is prohibited. The process of outputting the real identification medium PCd to a tangible object and invalidating the virtual identification data CCd corresponds to a process of reissuing the real identification medium PCd (real two-dimensional code PQC).

### [Details of Data Processing]

Next, details of each flow for implementing the data processing described so far will be described below based on FIGS. 5 to 7 and with reference to FIGS. 1 to 4. The cyberization process, the physicalization process, and the transfer process are started by execution of the information processing program by the data processing terminal 50. These processes are repeatedly performed by the data processing terminal 50 until the data processing terminal 50 is shut down or the information processing program is stopped.

### <Cyberization Process>

In the cyberization process shown in FIG. 5, the virtual identification data CCd is issued and transferred. In S11 of the cyberization process, an initial screen of software is displayed on the display 55. In S12, the display of the initial screen is ended, and the cyberization process is started. The process of S12 may be started based on a manipulation input to the data processing terminal 50 by an operator, or it may be started using a signal input from another processing terminal as a trigger.

In S13, the medium information of the real identification medium PCd (real two-dimensional code PQA, see FIG. 2), which is a delivered product delivered to the supplier SP and is attached to the supply item IPr of the supplier SP in the previous process, is read and acquired. S13 corresponds to an acquisition step of the medium information. As described above, the medium information may be image data of the real two-dimensional code PQA, or may be electronic data such as the item identification information read from the real two-dimensional code PQA.

In S14, the MAC address of the data processing terminal 50 in use is acquired as the terminal identification information for identifying the own terminal. In S15, transaction records to be transmitted to the data processing server 10 are set. Specifically, in S15, information on the processing process to be performed by the supplier SP in a state in which the CPS is "physical" (hereinafter referred to as physical process information), the MAC address acquired in S14, and the like are set.

In S16, data such as transaction records set in S15 is transmitted to the data processing server 10. In S16, a request to switch the CPS from "physical" to "cyber" is transmitted to the data processing server 10 as a conversion record of converting the real identification medium PCd to the virtual identification data CCd. In S16, a process image obtained by imaging the processing process of manufacturing the unattachable item IXS may be transmitted to the data processing server 10 as information included in the physical process information.

The above S15 and S16 correspond to a step of issuing the virtual identification data CCd. Based on reception of transaction records and the like from the data processing terminal 50, the data processing server 10 adds a block BL3 that records the processing process at the supplier SP and a block BL4 that records the cyberization process to the blockchain BC (see FIGS. 2 and 4). By changing the CPS of the blockchain BC from "physical" to "cyber", a conversion record from the real identification medium PCd to the virtual identification data CCd is left. The MAC address "aa" of the data processing terminal 50 used to issue the virtual identification data CCd is recorded in the block BL4 as the terminal identification information and the traceability information.

As described above, issuing the virtual identification data CCd refers to generating the virtual identification data CCd and transmitting a CPS change request and a MAC address to the data processing server 10. By changing the CPS, the real identification medium PCd is invalidated, while the virtual identification data CCd is validated. As a result, addition of traceability information associated with the real identification medium PCd is prohibited, and addition of traceability information associated with the virtual identification data CCd becomes possible.

In S17, a selection screen for selecting a task for transferring the virtual identification data CCd is displayed on the display 55. In S18, manipulation information of a selection manipulation by the operator is acquired. In S17 and S18, the operator is requested to select either a manipulation of presetting a transfer destination of the virtual identification data CCd or a manipulation of setting the MAC address at the transfer destination.

In S19, the task selected by the operator is discriminated. When the task of presetting the transfer destination is selected (S19: YES), information on the transfer process is set in S21. In this case, the MAC address of the data processing terminal 50 which is the transfer destination is set. To be more specific, in S21, the delivery destination of the unattachable item IXS is selected, and the data processing terminal 50 associated with this delivery destination is determined. Accordingly, the MAC address "bb" of the data processing terminal 50 is set as the terminal identification information for specifying the data processing terminal 50 of the delivery destination.

On the other hand, even when the transfer destination is not preset and setting at the transfer destination is selected (S19: NO), information on the transfer process is set in S20. In this case, a temporary value is set to the MAC address of the transfer destination. As an example, a character string such as "Sending" is employed as a temporary value. Such a temporary value may be changed as appropriate.

In S22, the image data or electronic data of the virtual identification data CCd (virtual two-dimensional code CQB) is transmitted to the data processing terminal 50 of the trader who is the delivery destination. In S22, information on the transfer process set in S20 or S21 is transmitted to the data processing server 10. The data processing server 10 adds the block BL5 that records the transfer process to the blockchain BC based on the information received from the data processing terminal 50 (see FIGS. 3 and 4). When the temporary value is set to the MAC address in S20, "Sending" is recorded in the block BL5. On the other hand, when the transfer destination is preset in S21, the transfer route "aa → bb" of the MAC address is recorded as traceability information in the block BL5. In S23, a message notifying the operator of the end of data transmission to the data processing server 10 or the like is displayed on the display 55.

### <Physicalization Process>

In the physicalization process shown in FIG. 6, the reissuance of the real identification medium PCd is performed. When the supply item IPr changes from the unattachable item IXS to a normal item to which the real identification medium PCd can be attached, the real identification medium PCd is reissued in place of the virtual identification data CCd through the physicalization process.

In S31 of the physicalization process, an initial screen of the software is displayed on the display 55. In S22, the display of the initial screen is ended, and the physicalization process is started. The process of S32 may be started based on a manipulation input to the data processing terminal 50 by an operator, or it may be started using a signal input from another processing terminal as a trigger.

In S33, the medium information of the virtual identification data CCd (see virtual two-dimensional code CQB in FIG. 3), which is a delivered product delivered to the supplier SP and is transferred from the data processing terminal 50 of the supplier SP in the previous process, is read and acquired. As described above, the medium information may be image data of the virtual two-dimensional code CQB, or may be electronic data such as the item identification information that can reproduce the virtual two-dimensional code CQB.

In S34, using the medium information (item identification information) acquired in S33, the data processing server 10 is inquired about the CPS and MAC address (hereinafter referred to as final MAC address) recorded in the last block BL5 (see FIG. 3) of the blockchain BC. In S35, the CPS and the final MAC address returned by the data processing server 10 in response to the inquiry in S34 are received and acquired.

In S36, the MAC address "bb" of the data processing terminal 50 in use is acquired as the terminal identification information for identifying the own terminal. In S37, it is determined whether the CPS is "cyber". In S37, it is determined whether one of the real identification medium PCd and the virtual identification data CCd currently being used matches the CPS as the conversion record in the data processing server 10. When the CPS is "physical", this indicates that there is no conversion record to the virtual identification data CCd. When the CPS is "cyber", this indicates that there is a conversion record to the virtual identification data CCd.

In S37, it is determined whether the final MAC address acquired in S35 and the MAC address of the own terminal acquired in S36 match. In S37, it is determined whether the MAC address that identifies the own terminal matches the final MAC address registered in advance in the blockchain BC in association with the virtual identification data CCd.

When the CPS is "physical" or when the MAC address of the own terminal is different from the final MAC address (S37: NO), the display 55 displays an error message in S38. The error message is the content that notifies the operator that an unauthorized process has been performed. For example, a warning message such as "This code is not for this terminal" is displayed.

In S39, the MAC address of the own terminal is transmitted to the data processing server 10 together with information on occurrence of a mismatch in the conversion record or a mismatch in the MAC address. Accordingly, addition of process information associated with the virtual two-dimensional code CQB is stopped. The data processing server 10 records the MAC address of the data processing terminal 50 that has been determined to be mismatched or inconsistent in the blockchain BC as traceability information associated with the virtual two-dimensional code CQB. Accordingly, a history of an unauthorized process performed at the data processing terminal 50 is left.

When the CPS is "cyber" and the MAC address of the own terminal matches the final MAC address (S37: YES), the real identification medium PCd is issued in S40 to S42. S40 to S42 correspond to a step of reissuing the real identification medium PCd. In S40, transaction records to be transmitted to the data processing server 10 are set.

Specifically, in S40, information on the processing process to be performed by the supplier SP in a state in which the CPS is "cyber" (hereinafter referred to as cyber process information) is set. The cyber process information indicates the details of the process performed on the unattachable item IXS at the supplier SP. In S40, the MAC address of the own terminal acquired in S36 and the like are set. The MAC address becomes terminal identification information (printing MAC) of the data processing terminal 50 that performs a printing process of the real two-dimensional code PQC (see FIG. 3). In S40, the setting of the MAC address that specifies the data processing terminal 50 that is permitted to add data is deleted.

In S41, the printer 56 prints the real identification medium PCd. Through S41, the real identification medium PCd on which the medium information is recorded is output as a tangible object. In S42, data such as transaction records set in S40 is transmitted to the data processing server 10. In S42, a request to switch the CPS from "cyber" to "physical" is transmitted to the data processing server 10 as a conversion record of converting the virtual identification data CCd to the real identification medium PCd.

Based on reception of transaction records and the like from the data processing terminal 50, the data processing server 10 adds a block BL6 that records the processing process at the supplier SP and a block BL7 that records the physicalization process (printing process) to the blockchain BC (see FIGS. 3 and 4). By changing the CPS from "cyber" to "physical", the reissuance of the real identification medium PCd is recorded on the blockchain BC.

As described above, reissuing the real identification medium PCd refers to outputting the real identification medium PCd and transmitting a CPS change request and a MAC address setting deletion request to the data processing server 10. By changing the CPS, the virtual identification data CCd is invalidated, while the real identification medium PCd is validated. As a result, addition of traceability information associated with the virtual identification data CCd is prohibited, and addition of traceability information associated with the real identification medium PCd becomes possible.

In S43, normal process information is set. In S44, data such as transaction records set in S43 is transmitted to the data processing server 10. S43 and S44 may be omitted when there are no processes to be recorded. In S45, a message notifying the operator of the end of data transmission to the data processing server 10 is displayed on the display 55.

### <Transfer Process>

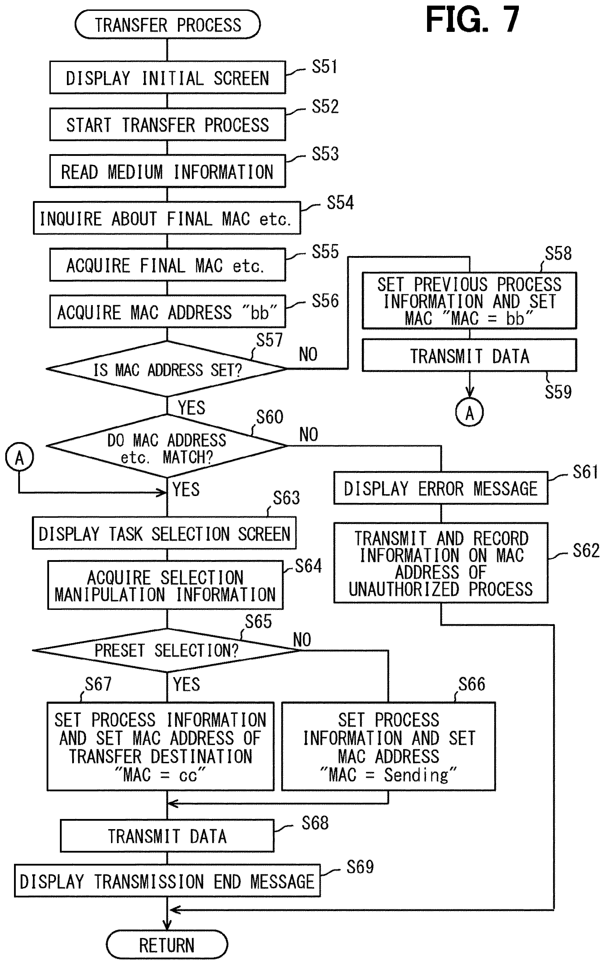

The transfer process shown in FIG. 7 is performed when the virtual identification data CCd is transferred on cyber, on the premise that the virtual identification data CCd (virtual two-dimensional code CQB) will be continuously used. As an example, when company D1 (see FIG. 3) supplies the unattachable item IXS to another trader, the data processing terminal 50 performs a transfer process in place of the above-mentioned physicalization process (see FIG. 6), and electronically transfers the virtual identification data CCd.

In S51 of the transfer process, an initial screen of software is displayed on the display 55. In S52, the display of the initial screen is ended, and the transfer process is started. The process of S52 may be started based on a manipulation input to the data processing terminal 50 by an operator, or it may be started using a signal input from another processing terminal as a trigger.

In S53 to S56, substantially the same process as S33 to S36 (see FIG. 6) of the physicalization process is performed. In S57, it is determined whether a MAC address designating a transfer destination is set in the blockchain BC. When the MAC address is not set and a character string such as "Sending" is set as a temporary value (S57: NO), the owner of the virtual two-dimensional code CQB on cyber is determined. Specifically, in S58, in place of the previous process, the value of the final MAC address is set to the MAC address "bb" of the own terminal. In S59, data set in S58 is transmitted to the data processing server 10.

In S60 to S62, substantially the same process as S37 to S39 (see FIG. 6) of the physicalization process is performed. When the CPS is "cyber" and the MAC address of the own terminal matches the final MAC address (S60: YES), or when the final MAC address is overwritten with the terminal identification information of the own terminal, S63 to S67 are performed.

In S63 to S67, substantially the same process as S17 to S21 (see FIG. 5) of the cyberization process is performed. Specifically, in S66, a character string such as "Sending" is set to the MAC address of the transfer destination as information on the transfer process. On the other hand, in S67, a MAC address "cc" of the data processing terminal 50 which is the transfer destination is set as the information on the transfer process.

In S68, information on the transfer process set in S66 or S67 is transmitted to the data processing server 10. In S68, the image data or electronic data of the virtual two-dimensional code CQB is transmitted to the data processing terminal 50 of the trader who is the delivery destination. The data processing server 10 adds the block that records the transfer process to the blockchain BC based on the information received from the data processing terminal 50. In S69, a message notifying the operator of the end of data transmission to the data processing server 10 is displayed on the display 55.

### [Summary of Embodiment]

In the present embodiment described so far, when the supply item IPr is the unattachable item IXS to which the real identification medium PCd cannot be attached, the virtual identification data CCd is issued to replace the real identification medium PCd. According to such switching from the real identification medium PCd to the virtual identification data CCd, it is possible to identify the unattachable item IXS using the virtual identification data CCd and to associate information with the unattachable item IXS. As a result, it becomes possible to handle the unattachable item IXS.

In the present embodiment, in the step of issuing the virtual identification data CCd, a conversion record of converting the real identification medium PCd to the virtual identification data CCd is transmitted to the data processing server 10 that manages traceability information. This allows for confirmation of the transfer to a process on cyber when adding traceability information on cyber. As a result, occurrence of an unauthorized process can be avoided.

In the present embodiment, when the supply item IPr changes from the unattachable item IXS to a normal item to which the real identification medium PCd can be attached, the real identification medium PCd is reissued in place of the virtual identification data CCd. Therefore, even when the state in which a physical product is present and the state in which it is absent is repeatedly changed in the supply chain SC, information can be reliably associated with the supply item IPr.

In the present embodiment, after outputting the real identification medium PCd on which the medium information is recorded, a conversion record from the virtual identification data CCd to the real identification medium PCd is transmitted to the data processing server 10. Therefore, the transfer from a process on cyber to a process on physical is performed in the presence of the real identification medium PCd. As a result, it becomes possible to stably restart the addition of the traceability information associated with the real identification medium PCd.

In the present embodiment, it is determined whether a conversion record from the real identification medium PCd to the virtual identification data CCd exists in the data processing server 10. When the conversion record exists in the data processing server 10, the step of reissuing the real identification medium PCd is performed. According to the above, when the virtual identification data CCd has not been issued, the real identification medium PCd is not reissued. Therefore, occurrence of an unauthorized process can be avoided.

In the present embodiment, it is determined whether one of the real identification medium PCd and the virtual identification data CCd currently being used matches the conversion record in the data processing server 10. When it does not match the conversion record, it is notified that an unauthorized process has been performed. According to the above, the operator of the supplier SP and the like can easily ascertain whether the task is being performed incorrectly. As a result, highly convenient supply chain SC management is possible.

In the present embodiment, when it does not match the conversion record, the terminal identification information for identifying the data processing terminal 50 for which a mismatch is determined is recorded as traceability information. In this way, the occurrence of an unauthorized process is left as traceability information, making it possible to manage the supply chain SC with high reliability.

In the present embodiment, in the step of issuing the virtual identification data CCd, the terminal identification information for identifying the data processing terminal 50 used to issue the virtual identification data CCd is recorded as traceability information. Accordingly, when the virtual identification data CCd is copied, data addition always occurs. Specifically, when one piece of the virtual identification data CCd is unauthorizedly copied into three copies, all of those processes remain. Therefore, from the terminal identification information left behind, it is possible to specify which data processing terminal 50 the unauthorized manipulation was performed on. As a result, highly reliable supply chain SC management is possible.

In the present embodiment, when transferring the virtual identification data CCd to the trader who is a delivery destination of the unattachable item IXS, the terminal identification information for specifying the data processing terminal 50 associated with the delivery destination is recorded as traceability information. Therefore, when an attempt is made to add data associated with the virtual identification data CCd with a terminal different from the data processing terminal 50 designated in the previous process, a mismatch in the terminal identification information will occur. According to the above, unauthorized data addition can be restricted, and thus highly reliable supply chain SC management is possible.

In the present embodiment, when recording process information, it is determined whether the terminal identification information for identifying the data processing terminal 50 matches terminal identification information registered in advance in association with the virtual identification data CCd. When the pieces of terminal identification information do not match, recording of the process information is stopped. According to the above, unauthorized data addition by the data processing terminal 50 is not performed. As a result, even when the virtual identification data CCd is used, highly reliable supply chain SC management can be realized.

In the present embodiment, when the pieces of terminal identification information do not match, the terminal identification information of the data processing terminal 50 for which a mismatch is determined is recorded as traceability information. In this way, the occurrence of an unauthorized process is left as traceability information, making it possible to manage the supply chain SC with high reliability.

In the present embodiment, the virtual identification data CCd is associated with a non-fungible token. Therefore, it is possible to verify that the virtual identification data CCd is not an unauthorized copy. As a result, unauthorized issuance (copying) of virtual identification data CCd is restricted, and thus the reliability of the supply chain SC management is further improved.

In the embodiment described above, the data processing server 10 corresponds to an "information management system", and the data processing terminal 50 corresponds to an "information processing terminal" and an "information processing device". The traceability information corresponds to "related information", the CPS corresponds to a "conversion record", the functional unit that performs the acquisition step of S13 corresponds to an "acquisition unit", and the functional unit that performs the issuing steps of S15 and S16 corresponds to an "issuance unit".

### (Other embodiments)

Although one embodiment according to the present disclosure has been described above, the present disclosure is not construed as being limited to the above-mentioned embodiments, and can be applied to various embodiments and combinations within a scope not departing from the spirit of the present disclosure.

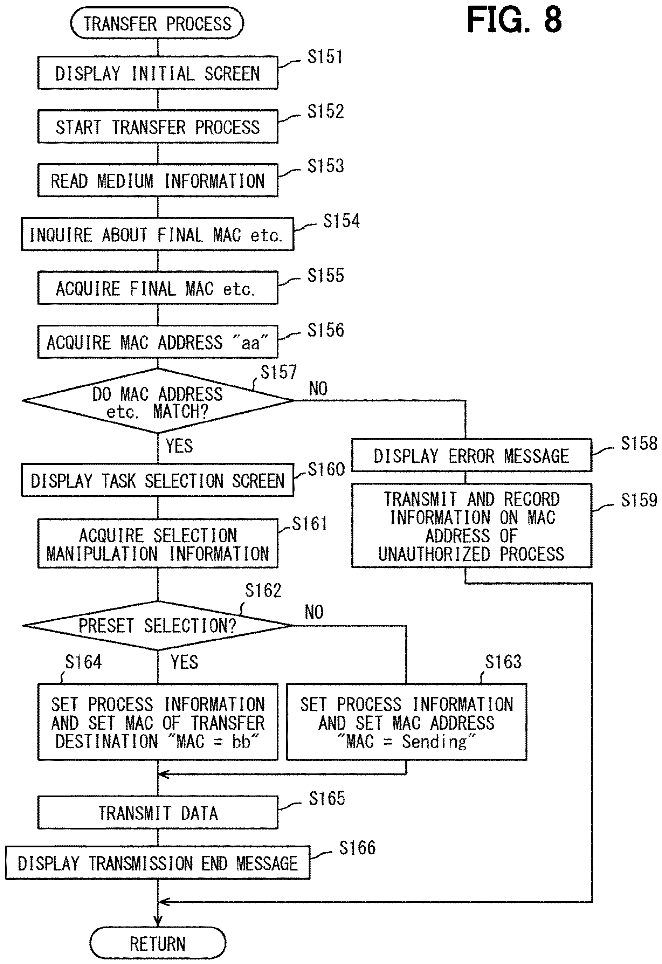

In the embodiment described above, both the issuance and transfer of the virtual identification data CCd have been performed by the cyberization process (see FIG. 5). On the other hand, in a first modification of the above embodiment, the transfer process of transferring the virtual identification data CCd is performed separately from the process of issuing the virtual identification data CCd. Specifically, in the transfer process of the first modification shown in FIG. 8, substantially the same processes as S51 to S56 (see FIG. 7) of the above embodiment are performed in S151 to S156. In S157 to S166, substantially the same processes as S60 to S69 (see FIG. 7) of the above embodiment are performed. However, in S156, the MAC address "aa" of the own terminal is acquired, and in S164, the MAC address "bb" of the transfer destination is set.

In a second modification of the above embodiment, an IP address allocated to the data processing terminal 50 is used as the terminal identification information. The data processing terminal 50 always transmits the IP address as terminal identification information to the data processing server 10 when performing each process. As in such a second modification, the terminal identification information is not limited to the MAC address, but may be information such as an IP address.

In a third modification of the above embodiment, at least a portion of the cyberization process, the physicalization process, and the transfer process are performed by the data processing server 10 or a server device different from the data processing server 10. As in such a third modification, arithmetic resources on the cloud may be used as appropriate for processing the traceability information.

In the physicalization process of the embodiment described above, after outputting the real identification medium PCd, the conversion record from the virtual identification data CCd to the real identification medium PCd has been transmitted. However, the output of the real identification medium PCd may also be performed after or simultaneously with the transmission of the conversion record to the real identification medium PCd.

In the above embodiment, the virtual two-dimensional code CQB has been used as the virtual identification data CCd. However, the virtual identification data CCd may not take the form of a two-dimensional code, and may be electronic data that follows a predefined format. The form of the real identification medium PCd is also not limited to the two-dimensional code and the RF tag, and may be changed as appropriate.

In the above embodiments, each function provided by the data processing server 10 and each of the terminals 50 and 110 can be provided by software and hardware that executes the software, only software, only hardware, or a complex combination thereof. When these functions are provided by electronic circuits as hardware, each function can also be provided by digital circuits that include a large number of logic circuits, or by analog circuits.

Each processor in the above embodiments may include at least one arithmetic core such as a central processing unit (CPU) and a graphics processing unit (GPU). The processor may further include a field-programmable gate array (FPGA), a neural network processing unit (NPU), an IP core with other dedicated functions, and the like. The processor may be individually mounted on a printed circuit board. Alternatively, a configuration implemented in an application specific integrated circuit (ASIC), a system on chip (SoC), an FPGA, or the like may correspond to the processor.

The form of the storage medium (non-transitory tangible storage medium) which is employed as each storage unit in the above embodiments and stores each program may be changed as appropriate. For example, the storage medium is not limited to a configuration provided on a circuit board, but may be provided in the form of a memory card or the like, inserted into a slot portion, and electrically connected to a bus of a computer. The storage medium may be an optical disc, a hard disk drive, or the like used as a source for copying or distributing a program to a computer.

The control unit and the method thereof described in the present disclosure may be implemented by a dedicated computer constituting a processor programmed to execute one or multiple functions embodied by a computer program. Alternatively, the device and the method thereof according to the present disclosure may be implemented by a dedicated hardware logic circuit. Alternatively, the device and the method thereof according to the present disclosure may be implemented by one or more dedicated computers configured with a combination of a processor that executes a computer program and one or more hardware logic circuits. The computer program may be stored in a non-transitory tangible computer-readable recording medium as an instruction to be executed by a computer.

### (Disclosure of Technical Ideas)

This specification discloses multiple technical ideas described in multiple items listed below. Some items may be written in a multiple dependent form, in which subsequent items alternatively refer to preceding items. Some items may be written in a multiple dependent form referring to another multiple dependent form. These items written in a multiple dependent form define multiple technical ideas.

### (Technical Idea 1)

An information processing method for processing related information related to a supply chain (SC) constructed including multiple traders, the information processing method including:
by at least one processor (51),
acquiring, when a supply item (IPr) supplied by the trader is an unattachable item (IXS) to which a real identification medium (PCd) for identifying the supply item is incapable of being attached, medium information of the real identification medium (S13); and
issuing, based on the medium information, virtual identification data (CCd) that replaces the real identification medium and identifies the unattachable item (S15, S16).

### (Technical Idea 2)

The information processing method according to technical idea 1, in which the issuing of the virtual identification data includes transmitting a conversion record of converting the real identification medium to the virtual identification data to an information management system (10) that manages the related information.

### (Technical Idea 3)

The information processing method according to technical idea 1 or 2, further including:
reissuing, when the supply item changes from the unattachable item to a normal item to which the real identification medium is capable of being attached, the real identification medium in place of the virtual identification data (S40 to S42).

### (Technical Idea 4)

The information processing method according to technical idea 3, in which the reissuing of the real identification medium includes:
outputting the real identification medium on which the medium information is recorded; and
transmitting, after outputting the real identification medium, a conversion record from the virtual identification data to the real identification medium to an information management system (10) that manages the related information.

### (Technical Idea 5)

The information processing method according to technical idea 4, further including:
determining whether the conversion record from the real identification medium to the virtual identification data exists in the information management system (S37),
in which, when the conversion record exists in the information management system, the reissuing is performed.

### (Technical Idea 6)

The information processing method according to any one of technical ideas 2, 4, and 5, further including:
determining whether one of the real identification medium and the virtual identification data currently being used matches the conversion record in the information management system (S37, S60, S157); and
providing, when the one of the real identification medium and the virtual identification data does not match the conversion record, a notification that an unauthorized process has been performed (S38, S61, S158).

### (Technical Idea 7)

The information processing method according to technical idea 6, further including:
recording, when the one of the real identification medium and the virtual identification data does not match the conversion record, terminal identification information for identifying a processing terminal (50) for which a mismatch is determined as the related information (S39, S62, S159).

### (Technical Idea 8)

The information processing method according to any one of technical ideas 1 to 7, in which the issuing of the virtual identification data includes recording terminal identification information for identifying a processing terminal (50) used to issue the virtual identification data as the related information.

### (Technical Idea 9)

The information processing method according to any one of technical ideas 1 to 8, further including:
recording, when transferring the virtual identification data to the trader who is a delivery destination of the unattachable item, terminal identification information for specifying a processing terminal (50) associated with the delivery destination as the related information (S21, S67, S164).

### (Technical Idea 10)

The information processing method according to any one of technical ideas 1 to 9, further including:
determining, when recording process information indicating details of a process performed on the unattachable item by the trader, whether terminal identification information for identifying a processing terminal (50) that records the process information matches terminal identification information registered in advance in association with the virtual identification data (S37, S60, S157); and
stopping, when the pieces of terminal identification information do not match, recording the process information.

### (Technical Idea 11)

The information processing method according to technical idea 10, further including:
recording, when the pieces of terminal identification information do not match, the terminal identification information of the processing terminal for which a mismatch is determined as the related information (S39, S62, S159).

### (Technical Idea 12)

The information processing method according to any one of technical ideas 1 to 11, further including:
associating the virtual identification data with a non-fungible token.

## Claims

1. An information processing method for processing related information related to a supply chain (SC) formed of a plurality of traders, the information processing method comprising:
by at least one processor (51),
acquiring, when a supply item (IPr) supplied by the trader is an unattachable item (IXS) to which a real identification medium (PCd) for identifying the supply item is not able to be attached, medium information of the real identification medium (S13); and
issuing, based on the medium information, virtual identification data (CCd) for identifying the unattachable item (S15, S16) in place of the real identification medium.

2. The information processing method according to claim 1, wherein
the issuing of the virtual identification data includes transmitting, to an information management system (10) that is configured to manage the related information, a conversion record of recording a conversion of the real identification medium to the virtual identification data.

3. The information processing method according to claim 1 or 2, further comprising:
reissuing, when the supply item changes from the unattachable item to a normal item to which the real identification medium is able to be attached, the real identification medium instead of the virtual identification data (S40 to S42).

4. The information processing method according to claim 3, wherein
the reissuing of the real identification medium includes:
outputting the real identification medium on which the medium information is recorded; and
transmitting, after outputting the real identification medium, a conversion record of recording a conversion from the virtual identification data to the real identification medium to an information management system (10) that is configured to manage the related information.

5. The information processing method according to claim 4, further comprising:
determining whether the conversion record from the real identification medium to the virtual identification data exists in the information management system (S37), wherein
when the conversion record is determined to exist in the information management system, the reissuing is performed.

6. The information processing method according to any one of claims 2, 4, and 5, further comprising:
determining whether one of the real identification medium and the virtual identification data that is currently being used matches the conversion record in the information management system (S37, S60, S157); and
notifying, when the one of the real identification medium and the virtual identification data is determined not to match the conversion record, that an unauthorized process has been performed (S38, S61, S158).

7. The information processing method according to claim 6, further comprising:
recording, when the one of the real identification medium and the virtual identification data is determined not to match the conversion record, terminal identification information for identifying a processing terminal (50) that is determined not to match as the related information (S39, S62, S159).

8. The information processing method according to any one of claims 1 to 7, wherein
the issuing of the virtual identification data includes recording terminal identification information for identifying a processing terminal (50) used to issue the virtual identification data as the related information.

9. The information processing method according to any one of claims 1 to 8, further comprising:
recording, when transferring the virtual identification data to the trader which is a delivery destination for the unattachable item, terminal identification information for specifying a processing terminal (50) associated with the delivery destination as the related information (S21, S67, S164).

10. The information processing method according to any one of claims 1 to 9, further comprising:
determining, when recording process information indicating details of a process performed on the unattachable item by the trader, whether terminal identification information for identifying a processing terminal (50) that records the process information matches terminal identification information that is registered in advance in association with the virtual identification data (S37, S60, S157); and
stopping, when the terminal identification information for identifying the processing terminal is determined not to match the pre-registered terminal identification information, recording the process information.

11. The information processing method according to claim 10, further comprising:
recording, when the terminal identification information for identifying the processing terminal is determined not to match the pre-registered terminal identification information, the terminal identification information of the processing terminal that is determined not to match as the related information (S39, S62, S159).

12. The information processing method according to any one of claims 1 to 11, further comprising:
associating the virtual identification data with a non-fungible token.

13. An information processing program for processing related information related to a supply chain (SC) formed of a plurality of traders, the information processing program causing at least one processor (51) to execute:
acquiring, when a supply item (IPr) supplied by the trader is an unattachable item (IXS) to which a real identification medium (PCd) for identifying the supply item is not able to be attached, medium information of the real identification medium (S13); and
issuing, based on the medium information, virtual identification data (CCd) for identifying the unattachable item (S15, S16) in place of the real identification medium.

14. An information processing device for processing related information related to a supply chain (SC) formed of a plurality of traders, the information processing device comprising:
an acquisition unit that is configured to acquire, when a supply item (IPr) supplied by the trader is an unattachable item (IXS) to which a real identification medium (PCd) for identifying the supply item is not able to be attached, medium information of the real identification medium (S13); and
an issuance unit that is configured to issue, based on the medium information, virtual identification data (CCd) for identifying the unattachable item (S15, S16) in place of the real identification medium.
